# Europäisches Patentamt

# European Patent Office

# Office européen des brevets

(19)

(11) Veröffentlichungsnummer: **0 240 704**
**B1**

(12) ## EUROPÄISCHE PATENTSCHRIFT

(45) Veröffentlichungstag der Patentschrift:
24.01.90

(51) Int. Cl.⁴: **F16F 9/46**

(21) Anmeldenummer: **87102887.4**

(22) Anmeldetag: **28.02.87**

(54) **Regelbarer Stossdämpfer.**

(30) Priorität: **04.04.86 DE 3611315**

(43) Veröffentlichungstag der Anmeldung:
**14.10.87 Patentblatt 87/42**

(45) Bekanntmachung des Hinweises auf die Patenterteilung:
**24.01.90 Patentblatt 90/4**

(84) Benannte Vertragsstaaten:
**DE FR GB SE**

(56) Entgegenhaltungen:
**EP-A- 0 122 575**
**EP-A- 0 157 181**
**DE-A- 3 327 832**
**DE-A- 3 406 214**
**DE-A- 3 432 395**
**FR-A- 2 528 140**
**NL-C- 105 487**

(73) Patentinhaber: **ROBERT BOSCH GMBH, Postfach 50,
D-7000 Stuttgart 1(DE)**

(72) Erfinder: **Breitenbacher, Jürgen, Dipl.-Ing.,
Lerchenstrasse 1, D-7056 Weinstadt(DE)**
Erfinder: **Kühle, Walter, Dipl.-Ing., Kirschenstrasse 15,
D-7129 Neckarwestheim(DE)**
Erfinder: **Mönnings, Roland, Dipl.-Ing., Laichinger
Strasse 7, D-7000 Stuttgart 60(DE)**
Erfinder: **Neumann, Udo, Dipl.-Ing.,
Albert-Schweitzer-Strasse 47, D-7250 Leonberg 6(DE)**
Erfinder: **Schramm, Wolfgang, Dr.-Ing.,
Ernst-Bloch-Weg 18, D-7000 Stuttgart 30(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen regelbaren Stoßdämpfer nach der Gattung des Hauptanspruchs. Ein derartiger Stoßdämpfer ist bekannt (EP-A 122 575).

Bei den beiden Ausführungsarten dieses Standes der Technik ist entweder eine translatorische oder eine rotatorische Verstellung des Muffenschiebers möglich. Das gilt auch für eine Bauart nach der FR-A 2 528 140.

Dazu kommt bei dem zuerst genannten Stand der Technik, der EP-A 122 575, daß dort auch bereits eine schrittweise Verstellung des Muffenschiebers angesprochen ist. Solche Verstellungen benötigen aber verhältnismäßig viel Zeit und sind deshalb neben unnötigem Energieverbrauch für manche Anforderungen zu träge.

Der Erfindung liegt die Aufgabe zugrunde, diesen Nachteil zu vermeiden und einen regelbaren Stoßdämpfer zu schaffen, der sich bei seinem Umschalten auf die jeweils kürzeste, umweglose Entfernung einstellt.

Diese Aufgabe wird gemäß der Erfindung bei einem gattungsgemäßen Stoßdämpfer durch die kennzeichnenden Merkmale des Patentanspruchs gelöst.

## Zeichnung

Ein Ausführungsbeispiel der Erfindung ist in der Zeichnung dargestellt und in der nachfolgenden Beschreibung näher erläutert. Es zeigen: Figur 1 einen Einrohr-Stoßdämpfer mit einem Muffenschiebar, Figur 2 ein Einstellhülse, Figur 3 eine Durchlaßhülse und Figur 4 ein Loch-Raster-Bild.

## Beschreibung des Ausführungsbeispiels

Ein Einrohr-Stoßdämpfer 11 hat einen flüssigkeitsgefüllten Stoßdämpfer-Zylinder 12 und einen im Zylinder 12 beweglichen Kolben 13. Der Kolben 13 trägt eine Kolbenstange 14, deren freies Ende aus dem Zylinder 12 herausragt und dort mit einer nicht gezeigten Befestigungsöse versehen ist; eine gleichartige Befestigungsöse ist auch am Boden des Zylinders 12 vorgesehen.

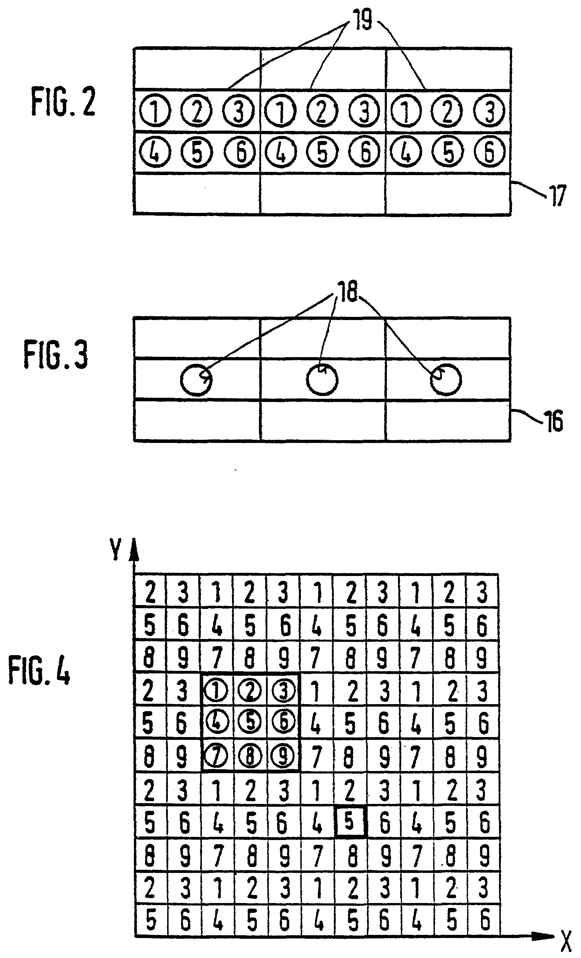

Der dem Kolben 13 benachbarte Teil der Kolbenstange 14 ist zu einem Gehäuse 15 erweitert, dessen unmittelbar an den Kolben 13 angrenzendes Teil als Durchlaßhülse 16 ausgebildet ist, in die dichtend und gleitbeweglich eine Einstellhülse 17 eingesetzt ist. Durchlaßhülse 16 und Einstellhülse 17 bilden zusammen einen Muffenschieber 16/17. Die am Kolben festliegende Durchlaßhülse 16 ist in Abwicklung in der Figur 3 dargestellt, sie hat drei gleiche, in gleicher Höhe und mit gleichem Abstand auf den Umfang verteilte Öffnungen 18.

Die in der Durchlaßhülse 16 verstellbare Einstellhülse 17 ist in der Figur 2 gezeigt. Sie hat einen Steuerspiegel von Einstellöffnungen unterschiedlichen Durchmessers, aus Gründen ver Vereinfachung sind alle Einstellöffnungen gleich groß gezeichnet, jedoch mit unterschiedlichen Zahlen versehen, die einen Hinweis auf ihre unterschiedlichen Durchmesser geben. In der Figur 2 sind drei gleiche Grundmuster 19 gleichmäßig auf dem Umfang verteilt dargestellt. Dieses Grundmuster 19 ist auch im Steuerspiegel nach der Figur 4 wieder zu finden. Dort ist zu erkennen, daß beispielsweise von der Öffnung 5 ausgehend, jede andere Öffnung 1, 2, 3, 4, 7, 8, 9 und 6 direkt und unmittelbar anfahrbar ist. Dabei ist es wichtig, daß eine Bewegung auf der X-Achse mit einer Bewegung auf der Y-Achse zu einem einzigen Bewegungsschritt kombiniert wird. Dabei erfolgt die Verstellung entlang einer Bahn, die die kürzeste Entfernung zweier Schieberstellungen ist.

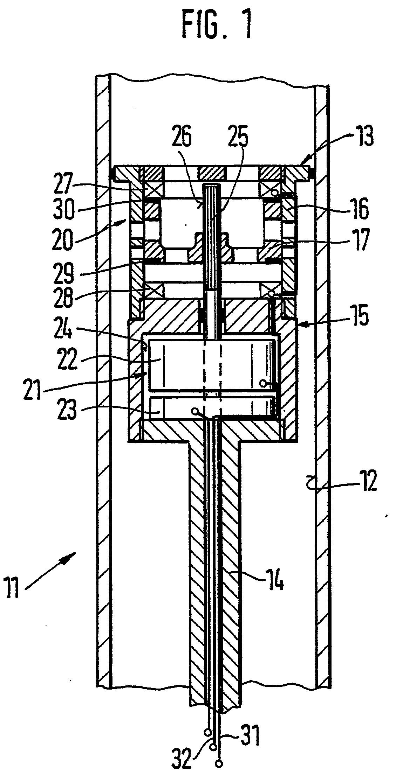

Zur Verstellung wird ein Hub-Antrieb 20 und ein Dreh-Antrieb 21 verwendet, die in der Figur 1 dargestellt sind. Der Dreh-Antrieb 21 hat einen Stellmotor 22 mit einem Drehwinkelgeber 23, die in einer Gehäuse-Aussparung 24 angeordnet sind. Die Bewegung des Dreh-Antriebs 21 wird über eine Welle 25 mit Zahnprofil 26 auf die Einstellhülse 17 übertragen. Auf diese Weise bewirkt der Dreh-Antrieb 21 bei Bestromung des Stellmotors 22 eine Rotation der Einstellhülse 17.

Der Hub-Antrieb 20 für die Einstell-Hülse 17 hat zwei Ringmagnete 27 und 28, die mit zwei an den Planflächen der Einstellhülse 17 angeordneten Ring-Gegenflächen 29 und 30 magnetisch zusammenarbeiten. Der Hub-Antrieb 20 bewirkt bei Bestromung eine Translation der Einstellhülse 17.

Elektrische Stromzuführungsleitungen 31 und 32 für den Hub-Antrieb 20 und den Dreh-Antrieb 21 sind durch die hohle Kolbenstange 14 hindurch nach außen geführt.

## Wirkungsweise

Zum Verstellen des Bypass-Durchgangs durch den Stoßdämpfer-Kolben 13 hindurch werden nach einer genauen Vorgabe eines jeweils neu auftretenden Fahrzustandes die notwendigen Dämpferkräfte durch gleichzeitige Bestromung des Dreh- und des Hubantriebes 20 und 21 in einem einzigen Schaltschritt mittels einer Dreh-Hub-Bewegung eingestellt, indem der aus Einstellhülse 17 und Durchlaßhülse 16 bestehende Muffenschieber 16/17 direkt und auf kürzestem Wege in seine neue Stellung gebracht wird. Dabei werden die translatorische und die rotatorische Bewegung miteinander kombiniert.

Auf diese Weise ist eine schnelle und sichere Verstellung der Dämpfungseigenschaft des Stoßdämpfers möglich. Die Einrichtung ist wenig störanfällig und hat eine lange Lebensdauer.

## Patentansprüche

Regelbarer Stoßdämpfer (11) für Kraftfahrzeuge mit einem flüssigkeitsgefüllten Zylinder (12), in dem ein mit Dämpferventilen versehener, eine Kolbenstange (14) tragender und den Zylinder in zwei Arbeitsräume teilender Kolben (13) angeordnet ist, wobei ein Bypass für den Flüssigkeitsdurchgang vorgesehen ist, dessen freier Durchlaß-Querschnitt durch ein in Schritten translatorisch bzw. rotatorisch verstellbares Stellelement (16, 17) veränderbar ist, dadurch gekennzeichnet, daß das Stellelement ein Muffenschieber (16, 17) ist, der mittels eines Längszahnprofils (26) und eines Stellmotors (22) eine Rotation und mittels zweier Ringmagnete (26, 27) gleichzeitig eine Translation durchführen kann, und daß der Muffenschieber (16, 17) mittels einer Schieberstellungs-Steuerung auf kürzeste Entfernung zwischen jeweils der alten und der neuen Schieberstellung direkt in die vorgewählte neue Schieberstellung bringbar ist.

## Claims

Adjustable shock absorber (11) for motor vehicles having a liquid-filled cylinder (12) in which a piston (13) is arranged which is provided with absorber valves, carries a piston rod (14) and divides the cylinder into two chambers, a bypass, the free passage cross-section of which is variable by a servo element (16, 17) adjustable in translation and/or rotation by steps, being provided for the passage of the liquid, characterized in that the servo element is a sleeve valve (16, 17) which can execute simultaneously a rotation by means of a longitudinal toothed profile (26) and a servomotor (22) and a translation by means of two annular magnets (26, 27), and that the sleeve valve (16, 17) can be brought into the preselected new valve position by the shortest distance between the respective old and new valve positions by means of a valve position control means.

## Revendications

Amortisseur réglable (11) comportant un cylindre (12) rempli de liquide dans lequel est placé un piston (13) muni d'une tige de piston (14) pourvue de soupapes d'amortisseur et séparant le cylindre (12) en deux chambres de travail, une dérivation étant prévue pour le passage du liquide dont la section libre de passage peut varier grâce à un élément de commande (16/17) est un curseur à manchon qui au moyen d'un profilé denté allongé (26) et d'un moteur de positionnement (22) peut provoquer une rotation et au moyen de deux aimants annulaires (26, 27) une translation simultanée, et en ce que le curseur-manchon (16/17) peut être amené au moyen d'une commande à curseur-manchon à l'éloignement le plus court entre chacune des anciennes et des nouvelles positions du curseur directement dans la nouvelle position présouhaitée du curseur.

# FIG. 1

FIG. 2

FIG. 3

FIG. 4